# EUROPÄISCHE PATENTSCHRIFT

(11) **EP 2 199 080 B1**
(45) Veröffentlichungstag und Bekanntmachung des Hinweises auf die Patenterteilung: **13.06.2012**
(21) Anmeldenummer: 09176763.2
(22) Anmeldetag: 23.11.2009
(51) Int. Cl.: B32B 38/10, B32B 38/06, B29C 44/56, B29L 31/58

(54) **Verfahren zur Herstellung eines Flächengebildes, insbesondere einer Polsterelementauflage, ein solches Flächengebilde und ein Polsterelement**
Method for producing a planar structure, in particular an upholstery element support, such a planar structure and an upholstery element
Procédé de fabrication d'une structure plate, notamment un support d'élément de rembourrage, une telle structure plate et un élément de rembourrage

(30) Priorität: 11.12.2008 DE 102008061801
(43) Veröffentlichungstag der Anmeldung: 23.06.2010
(60) Teilanmeldung: 12158389.2
(73) Patentinhaber: METZELER SCHAUM GMBH, 87700 Memmingen (DE)
(72) Erfinder: Kosar, Kay, 38461 Danndorf (DE); Springer, Christian, 87781 Ungerhausen (DE); Steppat, Maik, 87779 Trunkelsberg (DE); Hohenhorst, Manfred, 88430 Rot an der Rot (DE)
(74) Vertreter: Schober, Christoph D.

(56) Entgegenhaltungen:
- EP-A1- 0 572 104
- DE-A1- 19 640 263

## Beschreibung

Die Erfindung betrifft ein Verfahren zur Herstellung eines Flächengebildes, das insbesondere als Polsterauflage oder als Bezug Anwendung finden kann. Ferner betrifft die Erfindung ein solches Flächengebilde und ein Polsterelement, insbesondere eine Matratze, das einen Grundkörper und das Flächengebilde umfasst.

Herkömmliche Matratzen werden aus einem Polyurethan-Blockschaum in einem kontinuierlichen Verfahren auf einer Bandanlage hergestellt. Es ist ferner bekannt, den Matratzengrundkörper mit einer Aussparung zu versehen, in der eine Federelementeinheit mit einer Vielzahl von einzelnen Federelementen aufgenommen ist. Diese Federelemente können als Vollkörper oder auch mit einer Öffnung als Luftkanal versehen sein.

Weiterhin ist es bekannt, Matratzen- oder Sitzbezüge durch Aufkaschieren eines Textils auf eine Schaumstofflage herzustellen. Als wesentliche Eigenschaften für Matratzenauflagen und Sitzbezüge ist es wichtig, dass diese Polsterteile eine geeignete Atmungsaktivität und Luftdurchlässigkeit aufweisen, um den gewünschten Polsterkomfort und ein gesundes Polsterklima zu gewährleisten.

Weiterhin werden Schaumstoff-Flächengebilde auch für Verkleidungsteile und Schalldämmelemente eingesetzt. Die hierzu häufig verwendeten Werkstoffverbunde sind meistens nicht ausreichend luftdurchlässig, um eine geeignete Belüftung oder eine ausreichende Dämpfung zu erzielen. Schaumstofflagen aus geschlossenzelligem Schaumstoff sowie Kunststofffolien sind für diese Anwendungen ungeeignet, da sie sperrend wirken, keinerlei Feuchte- und Wärmetransport zulassen und als Schallabsorber wirkungslos sind.

Um die Luftdurchlässigkeit von Schaumstoffen zu erhöhen, kann der Schaumstoff bekanntermaßen in einem Nachbehandlungsprozess retikuliert werden, wobei Membranen in der Zellstruktur beseitigt werden, so dass ein erhöhter Luft- und Feuchtetransport möglich ist. Allerdings ist ein solches Retikulierverfahren aufwändig und teuer. Schließlich ist es bekannt, die auf die Schaumstofflage aufkaschierten Textillagen vorab zu perforieren, wobei sich dies infolge der geringen Lochgröße wenig effektiv auf die Atmungsaktivität und Luftdurchlässigkeit auswirkt.

Um Schaumstofflagen mit einer gewünschten Oberflächenprofilierung zu versehen, ist es bekannt, die Schaumstofflagen unter Komprimierung zu schneiden. So ist aus DE 33 10 921 A1 ein Verfahren zur kontinuierlichen Herstellung von Profilschnitten in der Oberfläche eines Weichschaumstoffes bekannt, wobei der Schaumstoff zwischen einer mit Ausschnitten versehen Schneidmaske und einem Druckkörper unter kontinuierlicher Verdichtung hindurchgeführt und der durch die Ausschnitte hindurch gedrückte Teil des Weichschaumstoffes durch ein Schneidwerkzeug abgeschnitten wird. Hierbei können Schneidmaske und Druckkörper in Bandform oder als Walzen ausgebildet sein. Als Schneidwerkzeug kann ein umlaufender oder oszillierender Draht, ein Bandmesser oder eine Bandsäge verwendet werden.

Weiterhin ist aus DE 35 31 248 A1 ein Verfahren zum Verbinden verschiedener Schaumstoffbahnen untereinander oder mit Folien beziehungsweise Platten mittels Flammkaschieren bekannt, bei dem die einzelnen Bahnen mit einer offenen Flamme an der Oberfläche kurzzeitig angeschmolzen und in dem hierdurch bewirkten klebrigen Zustand unter Druckeinwirkung flächig miteinander verbunden werden.

JP 2005/025181 A offenbart eine Polsterung, die einen aus viskoelastischem Schaum bestehenden Grundkörper aufweist. Im Grundkörper ist eine Aussparung eingebracht, in der eine Gelschicht angeordnet ist. Die Gelschicht ist mit dem viskoelastischen Schaum des Grundkörpers mittels Laminieren verbunden. Die Gelschicht weist Erhebungen und Vertiefungen auf.

DE 196 40 263 A1 beschreibt einen Polsterformkörper auf Basis eines Polyolefinschaumstoffs, der ein Formteil aus Polyolefinschaumstoff und eine auf diesem angeordnete Lage eines Textilmaterials umfasst. Das Formteil hat eine mit Erhebungen und Vertiefungen versehene geprägte Oberflächenstruktur. Das Textilmaterial liegt auf den Erhebungen der Oberflächenstruktur auf und ist mit diesen verbunden. Die Vertiefungen der Oberflächenstruktur bilden das Abführen von Wasserdampf bewirkende Kanäle.

Eine Badematte und ein Verfahren zur Herstellung einer Badematte wird in EP 0 572 104 A1 beschrieben. Die Badematte weist eine Oberschicht aus Gewebe oder Baumwolle und eine Unterschicht aus Schaumstoff auf. Die Unterschicht besteht aus Polyurethanschaum und ist mit der Oberschicht mittels Kleben, Nähen oder Heißkleben verbunden. Die Dicke der Unterschicht verringert sich während des Heißklebens. Nach der stoffschlüssigen Verbindung der beiden Schichten werden in die Schichten jeweils Vertiefungen eingebracht, die verhindern, dass Wasser von der Badematte auf den Fußboden gelangt. Zur Herstellung der Badematte wird zunächst die Unterschicht mittels einer Heizvorrichtung erhitzt, um so eine Klebeschicht zu bilden. Infolge des Erhitzens wird die Dicke der Unterschicht verringert. Anschließend werden die Schichten zusammengepresst und stoffschlüssig mittels Walzen verbunden. Abschließend werden Vertiefungen in die Schichten eingebracht und die Badematte entsprechend abgelängt.

Es hat sich als schwierig erwiesen, ein Flächengebilde auf einfache Weise und unter Gewährleistung einer ausreichenden Luftdurchlässigkeit, Atmungsaktivität und/oder Schalldämmung herzustellen.

Der Erfindung liegt die Aufgabe zu Grunde, ein Verfahren zur Herstellung eines Flächengebildes anzugeben, mit dem auf einfache Art und Weise ein Flächengebilde mit einer für den jeweiligen Anwendungszweck geeigneten Eigenschaften hinsichtlich Luftdurchlässigkeit, Atmungsaktivität und/oder Schalldämmung versehen werden kann. Ferner soll ein solches Flächengebilde und ein Polsterelement mit einem solchen Flächengebilde angegeben werden.

Zur Lösung dieser Aufgabe wird ein Verfahren mit den Merkmalen des Anspruchs 1, ein Flächengebilde mit den Merkmalen des Anspruchs 9 und ein Polsterelement mit den Merkmalen des Anspruchs 15 vorgeschlagen.

Bei dem erfindungsgemäßen Verfahren zur Herstellung eines Flächengebildes mit einer ersten Lage und einer zweiten Lage wird die Oberfläche einer Oberseite und/oder einer Unterseite der ersten Lage derart profiliert, dass Erhebungen, Vertiefungen und Dünnschichtbereiche mit einer geringen Dicke ausgebildet werden. Weiterhin wird die erste Lage zumindest bereichsweise mit der zweiten Lage stoffschlüssig verbunden. Die erste Lage wird zumindest bereichsweise erhitzt, dadurch unter Bildung einer Klebeschicht wenigstens teilweise thermisch zersetzt und unter Druckeinwirkung mit der zweiten Lage stoffschlüssig verbunden.

Die Dicke der Dünnschichtbereiche wird durch die Hitzeeinwirkung auf eine Restdicke reduziert, oder es können durch die Hitzeeinwirkung Öffnungen im Bereich der Dünnschichtbereiche entstehen. Diese Öffnungen können auch als Durchbrüche bezeichnet werden.

Unter dem Begriff "Dünnschichtbereich" kann insbesondere ein Bereich mit einer geringeren Dicke im Vergleich zu der Dicke der übrigen Bereiche der ersten Lage verstanden werden. Der "Dünnschichtbereich" kann auch als Dünnstelle bezeichnet werden. Die Dicke der Dünnschichtbereiche kann durch Hitzeeinwirkung und die thermische Zersetzung auf eine geringste Dicke reduziert werden. Beispielsweise weist die erste Lage vor dem Profilieren eine Dicke oder Stärke von bis zu 150 mm, vorzugsweise eine Stärke von 3 bis etwa 80 mm auf. Die nach dem Profilieren entstandenen Dünnschichtbereiche können beispielsweise eine Dicke beziehungsweise Stärke von 0,3 mm bis etwa 5 mm, vorzugsweise bis etwa 3 mm und weiter vorzugsweise von etwa 0,5 mm bis 1,5 mm aufweisen. Die Dicke beziehungsweise Stärke der übrigen Bereiche der ersten Lage kann ausgehend von beispielsweise 150 mm nach dem Profilieren von etwa 145 mm bis etwa 149,7 mm betragen. Vorzugsweise beträgt das Verhältnis zwischen der Dicke der Dünnschichtbereiche und der Dicke der restlichen Bereiche der ersten Lage etwa 1:10 bis etwa 1:20.

Die Erhitzung zusammen mit der thermischen Zersetzung kann auch als eine Art "Anschmelzen", "Anflammen" oder "Beflammen" bezeichnet werden oder derartige Maßnahmen umfassen. Beim Erhitzen und der dadurch bewirkten thermischen Zersetzung erfolgt eine Art "Abbrennen" einer bestimmten Schichtdicke des Materials der ersten Lage. Das thermisch zersetzte Material kann also wie eine Art "Schmelze" oder "Flüssigkeit" verstanden werden. Die stoffschlüssige Verbindung kann dabei wenigstens teilweise auch durch die chemische Reaktion des durch die Hitzeeinwirkung thermisch zersetzten Materials der ersten Lage bewirkt werden.

Beispielsweise bei Verwendung eines Schaumstoffes, insbesondere eines Weichschaumstoffes, für die erste Lage zerfällt das mit der Hitze beaufschlagte feste Material nach Überschreiten der Zersetzungstemperatur und bildet die Klebeschicht beziehungsweise einen Klebefilm aus, der dann unter Druckeinwirkung zum Verbinden von erster und zweiter Lage verwendet wird.

Die Dünnschichtbereiche und die Öffnungen bilden vorteilhafterweise Funktionsbereiche. So können die Dünnschichtbereiche als luftdurchlässige und atmungsaktive Bereiche bei der Verwendung des Flächengebildes als Matratze oder als schallschluckende Bereiche bei der Verwendung des Flächengebildes als Schalldämmelement oder Verkleidungsteil dienen. Ferner kann das Flächengebilde als atmungsaktive Polsterauflage oder als atmungsaktiver Polsterstoff in oder für Polsterungen, insbesondere für Sitze in Transportfahrzeugen, dienen.

In bevorzugter Ausgestaltung kann durch die Einwirkung der Hitze auf die erste Lage zugleich einerseits die stoffschlüssige Verbindung von erster und zweiter Lage und andererseits die Reduzierung der Dicke der ersten Lage im Bereich der der durch die Oberflächenprofilierung geschaffenen Dünnschichtbereiche entweder mit einer gewünschten Restdicke oder mit einer vollständigen Reduzierung der Dicke der Dünnschichtbereiche zur Erzeugung der Öffnungen erreicht werden.

Bei einer ersten Variante mit einer verbleibenden Restdicke der Dünnschichtbereiche bewirkt die Hitze eine teilweise thermische Zersetzung im Sinne eines "Anschmelzen" des Materials der ersten Lage, wodurch zugleich ein Klebefilm für die stoffschlüssige Verbindung von erster und zweiter Lage bereitgestellt wird. Hierbei bedeutet "teilweise", dass das Material nur im Bereich einer bestimmten Schichtdicke der ersten Lage thermisch zersetzt wird. Anschließend kann mit der zusätzlichen Einwirkung des Druckes eine Verbindung von erster Lage und zweiter Lage erreicht werden.

Bei einer zweiten Variante mit der Ausbildung der Öffnungen in den Bereichen der profilierten Dünnschichtbereiche bewirkt die Hitze ein lokales, vollständiges Zersetzen des Materials der ersten Lage über die gesamte Dicke der ersten Lage. Bei dieser zweiten Variante kann durch die Einwirkung der Hitze auf die die Dünnschichtbereiche umgebenden Bereiche - wie bei der ersten Variante - eine teilweise thermische Zersetzung der ersten Lage mit einer Dickenreduzierung unter gleichzeitiger Ausbildung einer Klebeschicht und dadurch eine stoffschlüssige Verbindung von erster und zweiter Lage erreicht werden.

Das erfindungsgemäße Verfahren kann vorzugsweise derart eingerichtet und geeignet sein, um wahlweise die erste Variante oder die zweite Variante durchführen zu können. Insbesondere können diese Varianten durch eine Steuerung auf einfache Weise gewählt werden. Vorzugsweise erfolgt das Verbinden durch Kaschieren, insbesondere mittels Flammkaschieren, also unter Einwirkung einer Flamme und Druck. Durch den Kaschiervorgang wird im gefertigten Sandwich (z.B. textile Oberware, Schaumstoff) eine Struktur erzeugt, die dem flächigen Textil eine dreidimensionale Struktur gibt.

In Hinsicht auf die Erhitzung des Schaumstoffes hat sich ein PUR-Weichschaumstoff auf Basis von Esterpolyol und/oder Etherpolyol oder Mischungen hiervon beziehungsweise auf Basis nachwachsender Rohstoffe umgesetzt mit aromatischen oder aliphstischen Isocyanaten und vorzugsweise auf TDI- oder MDI-Basis als besonders gut geeignet. Die Rohdichte des Schaumstoffes beträgt vorzugsweise zwischen etwa 10 bis 120 kg/m³, bevorzugt zwischen etwa 25 bis 75 kg/m³. Die Stauchhärte beträgt vorzugsweise zwischen etwa 0,5 bis 25 kPa, bevorzugt zwischen etwa 0,8 bis 12 kPa.

Je nach Dauer und Temperatur der Erhitzung beziehungsweise Beflammung kann das Flächengebilde in einer Variante sowohl Dünnschichtbereiche mit reduzierter Dicke als auch an anderen Stellen vormaliger Dünnschichtbereiche Öffnungen aufweisen. Ferner kann das Flächengebilde mehrere Zonen mit nur Öffnungen, nur reduzierten Dünnschichtbereiche oder einer kombinierten Anordnung von Öffnungen und reduzierten Dünnschichtbereichen aufweisen.

In bevorzugter Weiterbildung besteht die erste Lage aus der Schaumstofflage, dass heißt umfasst keine weiteren Materialien.

Das erfindungsgemäße Flächengebilde wird als Auflage für ein Polsterelement, insbesondere für eine Matratze oder einen Sitz, oder für ein Schalldämmelement oder für ein Verkleidungsteil, beispielsweise zur Verkleidung eines Innenraumes eines Kraftfahrzeugs, verwendet.

Bei einer bevorzugten Weiterbildung des Verfahrens können die Dünnschichtbereiche im Bereich der Vertiefungen erzeugt werden. Die Erhebungen und/oder Vertiefungen werden vorzugsweise durch eine kurven-, bogen- oder wellenförmige Profilierung abgebildet. Die wellenförmige Profilierung kann auch als Berg- und Talstruktur bezeichnet werden. Weiterhin sind auch im Querschnitt betrachtet abschnittsweise linear verlaufende Profilierungen, wie beispielsweise rechteckförmige, trapezförmige, höckerartige oder Zick-Zack-Profilierungen möglich. In bevorzugter Anwendung werden die Dünnschichtbereiche bei einer wellenförmigen Profilierung im Bereich der Vertiefungen beziehungsweise Wellentäler vorgesehen. Grundsätzlich ist es möglich sowohl die Oberseite als auch die Unterseite der zweiten Lage mit einer Profilierung zu versehen. Hierbei können für die Oberseite und die Unterseite unterschiedliche Profilierungstypen verwendet werden. In bevorzugter Anwendung verläuft die Oberseite oder die Unterseite in einer Ebene flächig und die gegenüberliegende Seite weist die Profilierung mit den Erhebungen und Vertiefungen auf.

Bei einer bevorzugten Weiterbildung des Verfahrens erfolgt das Erhitzen und die thermische Zersetzung in einem Ausmaß, dass die Dicke der ersten Lage im Bereich der Dünnschichtbereiche auf eine Restdicke von bis zu etwa 5 mm, vorzugsweise bis zu etwa 2 mm, reduziert wird. Weiter vorzugsweise wird die Dicke der ersten Lage im Bereich der Dünnschichtbereiche auf eine Restdicke von bis zu etwa 0 mm reduziert. Das Material der ersten, sich während des Erhitzens zersetzenden Lage dient insbesondere als Klebemedium zum stoffschlüssigen Verbinden mit der zweiten Lage. Das Erhitzen zusammen mit der thermischen Zersetzung kann beispielsweise in einem Ausmaß erfolgen, so dass die Dicke der ersten Lage um bis zu etwa 2 mm, insbesondere bis zu etwa 0,5 mm, reduziert wird. Die Dickenreduzierung kann in Abhängigkeit von der geforderten Schälfestigkeit gewählt werden.

Derartige geringe Restdicken ermöglichen es, die Dünnschichtbereiche als Funktionsbereiche im Hinblick auf die bestimmungsgemäße Anwendung des Flächengebildes auszubilden. Bei einer Verwendung des Flächengebildes als Matratzenauflage oder Polsterbezug erweist sich dieser Dünnschichtbereich als besonders atmungsaktiv und luftdurchlässig. Der Strömungswiderstand kann vernachlässigbar klein oder nicht vorhanden sein. Darüber hinaus lässt sich ein solches Flächengebilde, welches die Dünnschichtbereiche aufweist, aber ansonsten frei von Öffnungen oder Durchbrüchen ist, während des Herstellungsverfahrens gut handhaben, da das Flächengebilde eine ausreichende Steifigkeit aufweist und somit bei der Handhabung nicht zusammenfällt.

Bei einer bevorzugten Weiterbildung des Verfahrens wird die erste Lage mit einer Flamme, insbesondere einer offenen Flamme, erhitzt. Die Flamme kann auf einfache Weise manuell und/oder maschinell, insbesondere vollautomatisch, entlang der ersten Lage und in einem bestimmten Abstand von der ersten Lage geführt werden.

In bevorzugter Anwendung kann die Erhitzung und damit die thermische Zersetzung nur punktuell und/oder flächig erfolgen. Ebenso kann das anschließende Verbinden punktuell und/oder flächig erfolgen.

Im Hinblick auf die geometrische Ausgestaltung der Dünnschichtbereiche und/oder Öffnungen können diese eine kurvenlinienförmige, vorzugsweise bogenförmige oder runde, oder eine lineare, vorzugsweise viereckige oder achteckige, Form aufweisen beziehungsweise damit versehen werden. Grundsätzlich kann die lineare Form drei- bis zehnkantig ausgebildet sein.

Weiterhin können die Dünnschichtbereiche und/oder Öffnungen eine kurvenlinienförmige, vorzugsweise bogenförmige oder runde, oder eine lineare, vorzugsweise viereckige oder achteckige Form aufweisen beziehungsweise damit versehen werden. Im Hinblick darauf kann die kurvenlinienförmige oder lineare Ausgestaltung einen Durchmesser, eine lichte Weite oder eine Kantenlänge von etwa 1 mm bis etwa 50 mm, insbesondere von etwa 2 mm bis etwa 30 mm, aufweisen beziehungsweise damit versehen werden.

Bei einer bevorzugten Weiterbildung des Verfahrens liegt das Verhältnis der Gesamtfläche der Dünnschichtbereiche und/oder Öffnungen zu der Restfläche des Flächengebildes in einem Bereich von etwa 1:50 bis etwa 1:2, vorzugsweise in einem Bereich von etwa 1:30 bis etwa 1:20.

In einer bevorzugten Ausgestaltung des Verfahrens erfolgt das Profilieren durch Schneiden, insbesondere mittels eines Messers oder eines Drahtes, durch Komprimieren und/oder Umformen. Das Schneiden kann hierbei durch eine oszillierende oder eine rotierende Bewegung des Messers oder Drahtes erfolgen. Für das Komprimieren kann beispielsweise ein Druck aufgebracht werden, z.B. mittels einer Stempel- oder Prägeeinrichtung. Das Umformen kann durch Hindurchdrücken des entsprechenden Materialbereiches der ersten Lage durch eine Maske erfolgen.

Bei der Profilierung ist das Verhältnis zwischen der Dicke der Dünnschichtbereiche und der Dicke der übrigen Bereiche der ersten Lage durch die Art des Profilwerkzeuges wählbar. Weiterhin kann je nach ausgewähltem Druck die gewünschte geringe Dicke der Dünnschichtbereiche gewählt werden.

Beispielsweise kann ein Profilwerkzeug mit einer Walze mit einer entsprechenden Profilierung ausgestattet verwendet werden. Der Komprimierungsgrad kann beispielsweise so eingestellt werden, dass eine Schaumstoffbahn mit einer Ausgangsstärke von zwischen etwa 3 mm und 50 mm, vorzugsweise zwischen etwa 5 mm und 30 mm, nach Profilierung mittels der Walze eine Dicke von bis zu etwa 3 mm, vorzugsweise bis etwa 1 mm, in den Dünnschichtbereichen aufweist. Die Walze kann mit unterschiedlichen Profilierungsmitteln bestückt werden, die die gewünschte Oberflächenprofilierung in der ersten Lage hinterlassen. Ferner können über die Länge der Walze verschiedene Profilringe mit gleichem Außendurchmesser nebeneinander angeordnet werden, so dass die profilierte erste Lage verschiedene Profilgeometrien nebeneinander aufweist. Dies eignet sich insbesondere dann, wenn das Flächengebilde als Matratzenauflage für eine Mehrzonenmatratze eingesetzt wird.

Für die erste Lage wird vorzugsweise ein durch Hitzeeinwirkung wenigstens teilweise thermisch zersetzbare Material verwendet. So kann beispielsweise für die erste Lage ein Schaumstoff, insbesondere ein offenzelliger oder ein geschlossenzelliger Weichschaumstoff, und/oder eine Kunststofffolie verwendet werden. Als zweite Lage kann vorteilhafterweise eine Schaumstofflage, eine Kunststofffolie, ein Textil, ein Vlies oder Leder verwendet werden.

Bei einer bevorzugten Weiterbildung des Verfahrens erhält die zweite Lage beim Verbinden von der ersten Lage mit der zweiten Lage im Wesentlichen die Oberflächenprofilierung von der ersten Lage. Besonders bevorzugt entspricht die Oberflächenprofilierung der zweiten Lage derjenigen der ersten Lage. Hierzu wird insbesondere ein geeignetes Material mit einer geeigneten Materialdicke für die zweite Lage verwendet, beispielsweise eine Textillage geringer Dicke. Die Übernahme der Oberflächenprofilierung wird während des Verbindens von erster Lage mit zweiter Lage erreicht. Es hat sich insbesondere herausgestellt, dass ein Textil als zweite Lage, welches mittels Flammkaschieren mit der profilierten zweiten Lage, die vorteilhafterweise eine Schaumstofflage umfasst oder aus einer solchen besteht, verbunden wird, die Kontur der Profilierung der ersten Lage im Wesentlichen, beinahe vollständig oder vollständig annimmt. Auf diese Weise wird durch das Profilieren und das anschließende Verbinden mittels Klebekaschieren oder Flammkaschieren zugleich eine Strukturierung der Oberseite der zweiten Lage erreicht, wobei neben einer verbesserten Atmungsaktivität zugleich eine optisch ansprechende Strukturierung der Oberfläche erreicht werden kann.

Das erfindungsgemäße Flächengebilde, das insbesondere eine Polsterelementauflage oder ein Bezug ist, ist mit einer ersten Lage, die eine Oberseite, eine Unterseite und eine profilierte Oberfläche mit Erhebungen und Vertiefungen aufweist, versehen. Ferner ist eine zweite Lage vorgesehen, die stoffschlüssig mit der ersten Lage verbunden ist, wobei die erste Lage Dünnschichtbereiche mit einer geringen Dicke und/oder Öffnungen aufweist. Die erste Lage ist mit der zweiten Lage mittels einer bei einer Erhitzung der ersten Lage und dadurch wenigstens teilweisen thermischen Zersetzung gebildeten Klebeschicht verbunden.

Die Dünnschichtbereiche und/oder Öffnungen sind durch die Erhitzung, insbesondere durch eine Flamme, und die wenigstens teilweise thermische Zersetzung gebildet.

Bei einer bevorzugten Ausgestaltungsform des Flächengebildes sind die Dünnschichtbereiche im Bereich der Vertiefungen vorgesehen.

In bevorzugter Ausgestaltung bilden die Dünnschichtbereiche und/oder Öffnungen in der jeweiligen bestimmungsgemäßen Anwendung des Flächengebildes Luftdurchlassbereiche oder Schalldämmbereiche. Die Öffnungen können auch als Lochungen, Durchbrüche oder Ausnehmungen bezeichnet werden. Vorzugsweise haben diese Öffnungen eine kurvenlinienförmige oder abschnittsweise lineare Form. Beispielsweise kann für die Öffnungen ein Durchmesser, eine lichte Weite oder eine Kantenlänge von etwa 1 mm bis etwa 50 mm, insbesondere von etwa 2 mm bis etwa 30 mm, vorgesehen sein.

Bei einer bevorzugten Ausgestaltung weisen die Dünnschichtbereiche eine Dicke beziehungsweise Restdicke von bis zu etwa 5 mm, vorzugsweise bis zu etwa 1 mm, auf. Hinsichtlich der Abmessungen und deren gegenseitigen Verhältnisse der ersten Lage vor und nach dem Profilieren und der Dünnschichtbereiche vor und nach der thermischen Zersetzung wird auf obige Ausführungen verwiesen.

Weiterhin können mehrere Zonen mit unterschiedlicher Formgebung und/oder gegenseitiger Anordnung der Dünnschichtbereiche und/oder Öffnungen vorgesehen sein. Beispielsweise können diese Zonen entlang einer Längsrichtung oder einer Querrichtung des Flächengebildes aufgeteilt, benachbart oder beabstandet zueinander angeordnet sein. So lässt sich beispielsweise das Flächengebilde als Polsterauflage für eine mit mehreren, unterschiedlich ausgestatteten Liegezonen einer Matratze einsetzen.

Für die erste Lage wird vorzugsweise ein durch Hitzeeinwirkung wenigstens teilweise thermisch zersetzbare Material verwendet. So kann die erste Lage beispielsweise aus einem Schaumstoff, insbesondere einem offenzelligen oder einem geschlossenzelligen Schaumstoff, insbesondere einem Weichschaumstoff, und/oder einer Kunststofffolie bestehen. Die Dünnschichtbereiche und/oder Öffnungen ermöglichen es selbst bei einem geschlossenzelligen Weichschaumstoff, die erste Lage luftdurchlässig und atmungsaktiv oder auch mit schalldämpfenden Eigenschaften auszugestalten. Darüber hinaus kann zugleich die wasser- beziehungsweise feuchtigkeitsabweisende Eigenschaft in Folge der geschlossenen Zellen genutzt werden.

Für die zweite Lage des Flächengebildes können die unterschiedlichsten Materialien verwendet werden. Beispielsweise kann die zweite Lage eine Schaumstofflage, eine Kunststofffolie, ein Textil, ein Vlies oder ein Leder umfassen. Ferner kann die zweite Lage mit Lochungen beziehungsweise einer Perforation versehen werden. Eine solche Maßnahme trägt wiederum zur Luftdurchlässigkeit und Atmungsaktivität des Flächengebildes bei. Dies erweist sich insbesondere dann als vorteilhaft, wenn sich die Lochungen mit den Dünnschichtbereichen und/oder den Öffnungen wenigstens teilweise überdecken.

Eine weitere Idee der Erfindung liegt in einem Polsterelement, das einen Grundkörper und das erfindungsgemäße Flächengebilde aufweist. Das Polsterelement ist beispielsweise ein Liege, insbesondere eine Matratze, oder ein Sitz, oder Bestandteil derartiger Polsterteile. Vorteilhafterweise ist dieses Flächengebilde bei der kombinierten Anwendung mit einem Matratzengrundkörper als Polsterauflage im Sinne einer Schaumlage oder als Bezug ausgebildet.

Bei einer bevorzugten Ausgestaltung ist eine Federelementeinheit mit mehreren Federelementen vorgesehen, wobei das Federelement eine Ausnehmung umfasst und wobei das Flächengebilde auf der Federelementeinheit angeordnet und derart relativ zu der Federelementeinheit positioniert ist, dass sich die Dünnschichtbereiche und/oder Öffnungen mit den Ausnehmungen wenigstens teilweise überdecken.

Vorteilhafterweise sind die mehreren Federelemente jeweils in Form eines rohrartigen Schaumstoffkörpers mit einer inneren, durchgehenden Ausnehmung als Luftkanal ausgebildet. Für die geometrische Ausgestaltung der Ausnehmung und des Außenumrisses des Federelementes sind vielfältige kurvenlinienförmige oder lineare beziehungsweise abschnittsweise lineare Gestaltungen denkbar. Als besonders vorteilhaft hat sich eine achteckige Form für den Außenumriss und eine ellipsenförmige oder runde Form für die innere Ausnehmung erwiesen.

Bei einer weiteren bevorzugten Ausgestaltung sind zwischen den Federelementen Freiräume vorgesehen und das Flächengebilde ist derart auf der Federelementeinheit angeordnet und relativ dazu positioniert, dass sich die Dünnschichtbereiche und/oder Öffnungen mit den Freiräumen wenigstens teilweise überdecken.

Somit kann das Flächengebilde als Polsterauflage oder Bezug für den Matratzengrundkörper hinsichtlich seiner Abmessungen, der Oberflächenprofilierung und der Größe und Lage der Dünnschichtbereiche oder Öffnungen abgestimmt sein.

Weiterhin kann der Grundkörper aus der Federelementeinheit bestehen oder die Federelementeinheit umfassen. Für den Fall das der Grundkörper aus der Federelementeinheit besteht, können beispielsweise eine Vielzahl von nebeneinander sich berührend angeordneten Federelementen oder eine Vielzahl von nebeneinander, aber beabstandet, angeordneten Federelemente vorgesehen sein.

Ferner kann der Grundkörper eine Aussparung umfassen, in der die Federelementeinheit aufgenommen ist. Hierbei weist der Grundkörper in Folge der Aussparung im verbleibenden Querschnitt des Grundkörpers seitliche Wandungen auf, die die Federelementeinheit abstützen. Diese seitlichen Wandungen können zugleich als Sitzkante dienen.

Im Zusammenhang mit den verschiedenen Möglichkeiten zur Ausgestaltung der Federelementeinheit, der einzelnen Federelemente, der Freiräume, der seitlichen Wandungen, des Grundkörpers, der Ausnehmung und der Einbindung der Federelementeinheit in das Polsterelement wird auf das deutsche Patent 10 2006 025 136 verwiesen und dessen Inhalt zum Bestandteil der vorliegenden Beschreibung gemacht.

Das eingangs genannte erfindungsgemäße Verfahren zur Herstellung eines Flächengebildes wird vorzugsweise zur Herstellung einer Polsterelementauflage, insbesondere für eine Matratze, ein sonstiges Liegeteil oder einen Sitz, oder zur Herstellung eines Schalldämmelementes oder eines Verkleidungsteils verwendet. Gleichermaßen kann das erfindungsgemäße Flächengebilde als Polsterelementauflage, insbesondere für eine Matratze, ein sonstiges Liegeteil oder einen Sitz, oder für ein Schalldämmelement oder ein Verkleidungsteil verwendet werden.

Nachfolgend wird die Erfindung unter Bezugnahme auf die Zeichnungen weiter erläutert. Dabei zeigen schematisch:
- Fig. 1: einen Vertikalschnitt durch eine erste Lage des erfindungsgemä- ßen Flächengebildes vor der Oberflächenprofilierung;
- Fig. 2: eine erste Ausführungsform der ersten Lage gemäß Fig. 1 nach der Oberflächenprofilierung mit Erhebungen und Vertiefungen;
- Fig. 3: eine zweite Ausführungsform der ersten Lage mit einer alternativen Oberflächenprofilierung;
- Fig. 4: eine dritte Ausführungsform der ersten Lage mit einer alternativen Oberflächenprofilierung;
- Fig. 5: eine vierte Ausführungsform der ersten Lage mit einer alternativen Oberflächenprofilierung;
- Fig. 6: eine erste Ausführungsform des erfindungsgemäßen Flächenge- bildes, bei dem die erste Lage mit einer zweiten Lage stoffschlüs- sig verbunden ist und wobei die erste Lage Öffnungen aufweist;
- Fig. 7: eine zweite Ausführungsform des erfindungsgemäßen Flächenge- bildes, wobei die erste Lage stoffschlüssig mit der zweiten Lage verbunden ist und die erste Lage Dünnschichtbereiche aufweist;
- Fig. 8: eine schematische Ansicht von oben auf das erfindungsgemäße Flächengebilde gemäß Fig. 6 oder 7;
- Fig. 9: eine Ansicht von oben auf ein einzelnes Federelement und einen Längsschnitt durch dieses Federelement;
- Fig. 10: eine Ansicht von oben auf eine Federelementeinheit mit mehreren Federelementen;

- Fig. 11: eine Ansicht von oben auf ein Polsterelement mit einem Grundkör- per, wobei eine Federelementeinheit mit einer Vielzahl von Feder- elementen in einer Aussparung des Grundkörpers aufgenommen ist;
- Fig. 12: einen Ausschnitt einer Ansicht von oben auf die Anordnung gemäß Fig. 11 mit zusätzlicher Darstellung der Lage der Dünnschichtbe- reiche beziehungsweise Öffnungen der ersten Lage des erfin- dungsgemäßen Flächengebildes;
- Fig. 13: einen Längsschnitt durch die Anordnung gemäß Fig. 12.

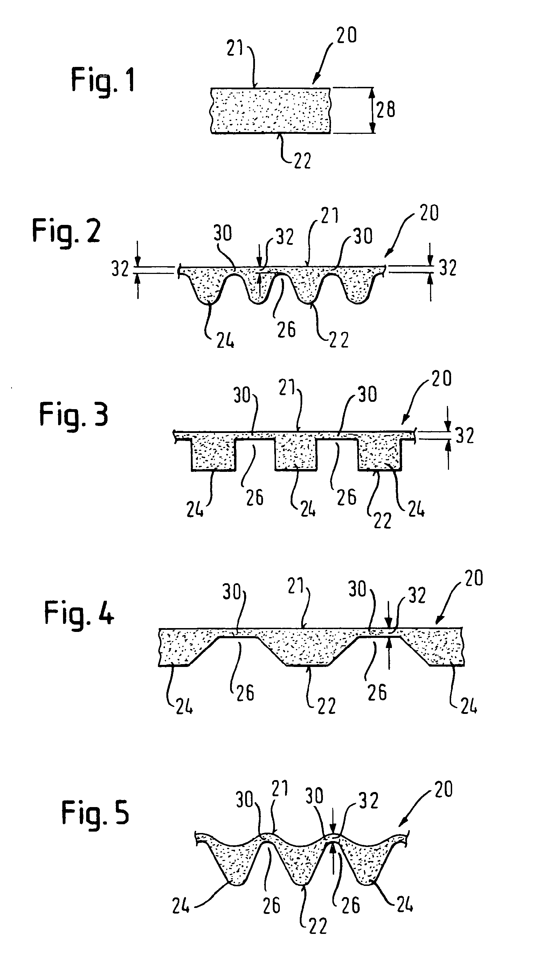

Fig. 1 zeigt eine erste Lage 20 aus einem Schaumstoff, vorzugsweise aus einem offenzelligen PUR-Weichschaumstoff. Diese erste Lage 20 hat vor der Oberflächenprofilierung eine Dicke 28 und kann auch als Schaumstofflage bezeichnet werden. Diese Schaumstofflage kann als Bahnenware in endloser Länge und mit einer vorbestimmten Breite oder in Form von Schaumstoffplatten vorliegen. Beispielsweise weist die erste Lage 20 eine Länge von 1 m bis 2000 m, vorzugsweise von 20 m bis 1000 m, eine Breite von etwa 10 mm bis etwa 3,50 m, vorzugsweise von 10 cm bis 2,50 m und eine Stärke beziehungsweise Dicke 28 von etwa 2 mm bis 80 mm, vorzugsweise von etwa 3 mm bis etwa 15 mm, auf. In Fig. 1 ist eine Oberseite 21 und eine Unterseite 22 der ersten Lage 20 noch in einem unprofilierten Zustand.

Die Fig. 2 bis 5 zeigen dann die erste Lage 20 nachdem die Oberseite 21 und/oder die Unterseite 22 mit einer Oberflächenprofilierung versehen worden ist. Diese Oberflächenprofilierung als erster Verfahrensschritt zur Herstellung des erfindungsgemäßen Flächengebildes erfolgt durch ein Schneiden, Komprimieren und/oder Umformen der ersten Lage 20. Das Schneiden kann mit einem Schneidmittel, insbesondere einem Messer oder einem Draht, durchgeführt werden, welches oszillierende oder rotierende Bewegungen durchführt. Das Komprimieren erfolgt beispielsweise durch Aufdrücken eines Druckstempels, wobei die Dicke der ersten Lage in diesem Bereich reduziert wird. Bei einem Umformen wird wenigstens ein Teil der ersten Lage 20 durch eine Ausnehmung oder eine Maske hindurchgedrückt und das hindurchgedrückte Schaumstoffteil auf der gegenüberliegenden Seite der Ausnehmung oder Maske abgeschnitten.

Nach dem Profilieren weist die Oberseite 21 und/oder die Unterseite 22 eine Oberflächenprofilierung mit Erhebungen 24 und Vertiefungen 26 und Dünnschichtbereichen 30 auf. Wie die Fig. 2 bis 5 zeigen, können die Erhebungen 24 und Vertiefungen 26 unterschiedlichste geometrische Formen aufweisen. So zeigt Fig. 2 eine wellenförmige Oberflächenprofilierung, wobei Berge die Erhebungen 24 und Täler die Vertiefungen 26 bilden. Fig. 3 zeigt eine rechteckförmige Ausgestaltung der Erhebungen 24 und Vertiefungen 26. Fig. 4 zeigt eine abschnittsweise lineare und insbesondere trapezförmige Oberflächenprofilierung für die Erhebungen 24 und Vertiefungen 26. Die Dünnschichtbereiche 30 sind bei gezeigten Ausführungsbeispielen im Bereich der Vertiefungen 26 vorgesehen und haben eine geringe Dicke 32 (siehe Fig. 2). Diese Dicke 32 ist also weit aus geringer als die Ausgangsdicke 28 der ersten Lage (siehe Fig. 1). Vorzugsweise beträgt die Dicke 32, also die Dicke nach dem Profilieren in den Dünnschichtbereichen 30, etwa 0,3 mm bis etwa 5 mm.

Bei den Fig. 2 bis 4 ist die Oberflächenprofilierung mit den Erhebungen 24 und Vertiefungen 26 lediglich auf der Unterseite 22 der ersten Lage 20 vorgesehen, wohingegen die Oberseite 21 ebenflächig ausgebildet ist. In Fig. 5 ist der Vollständigkeit halber angedeutet, dass zusätzlich zu der Unterseite 22 auch die Oberseite 21 mit einer Oberflächenprofilierung versehen werden kann. Hierzu ist in Fig. 5 lediglich beispielhaft eine wellenförmige Oberflächenprofilierung angedeutet, es können aber auch die in den Fig. 2 bis 4 für die Unterseite 22 angedeuteten Verläufe der Oberflächenprofilierung auf die Oberseite 21 übertragen werden.

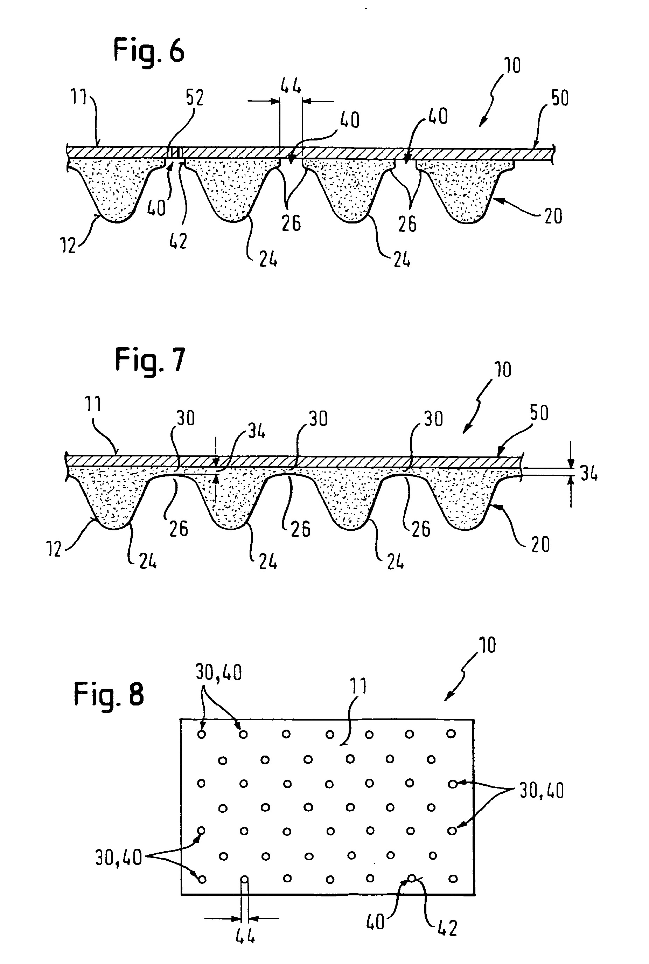

In den Fig. 6 bis 8 ist ein fertig gestelltes Flächengebilde 10 mit der ersten Lage 20 mit einer Oberflächenprofilierung gemäß Fig. 2 und einer zweiten Lage 50 aus einem Textil dargestellt.

Zur Herstellung des Flächengebildes 10 wird bei einer ersten Variante gemäß Fig. 6 die erste Lage 20 zumindest bereichsweise, das heisst im Bereich zumindest eines oder mehrerer Dünnschichtbereiche 30, erhitzt und dadurch das Material der ersten Lage 20 über die Dicke 32 des Dünnschichtbereiches 30 unter Bildung einer Klebeschicht mittels thermischer Zersetzung auf Null reduziert. Auf diese Weise entstehen im Bereich des Dünnschichtbereichs 30 eine Öffnung 40 bzw. im Bereich der Dünnschichtbereiche 30 die Öffnungen 40.

Das Erhitzen bzw. "Anschmelzen" der ersten Lage erfolgt vorzugsweise mittels einer offenen Flamme und in einem Ausmaß, so dass das Schaumstoffmaterial der ersten Lage 20 lokal, das heisst im Bereich des jeweiligen Dünnschichtbereichs 30, entfernt wird und sich die Öffnung 40 bildet.

Bei diesem Vorgang kann die Einwirkung der Hitze auf die die Dünnschichtbereiche 30 umgebenden Bereiche ein Erhitzen bzw. "Anschmelzen" mit teilweiser thermischer Zersetzung dieser Umgebungsbereiche der ersten Lage 20 mit einer Dickenreduzierung unter gleichzeitiger Ausbildung einer Klebeschicht bewirken. Mittels dieser Klebeschicht kann dann die erste Lage 20 unter Druckeinwirkung mit der zweiten Lage 50 im Bereich der Umgebungsbereiche stoffschlüssig verbunden werden.

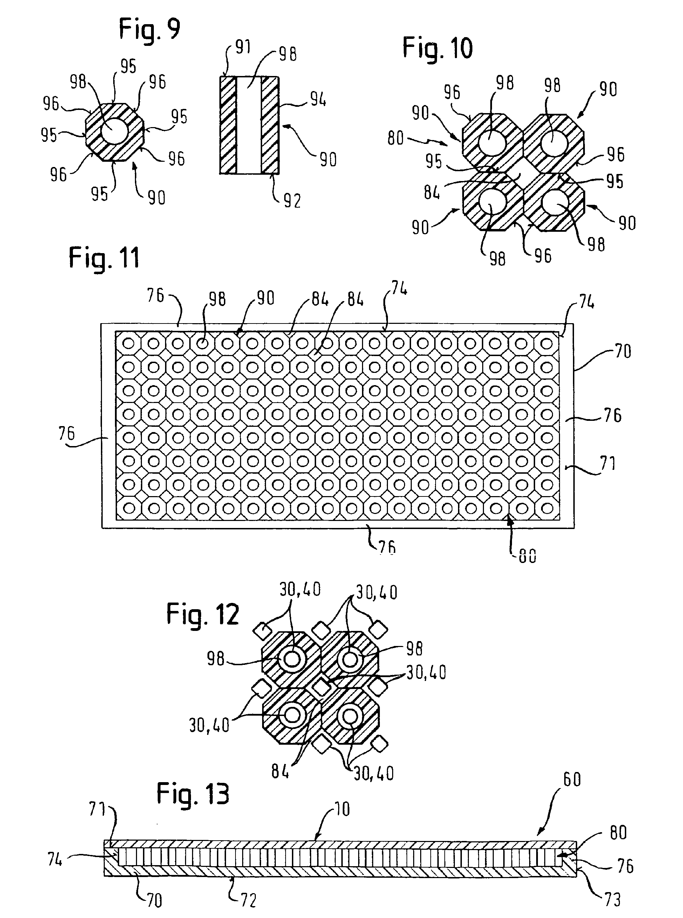

Die Öffnungen 40 sind insbesondere dann vorteilhaft, wenn das Flächengebilde 10 als Polsterauflage für eine mit Luftkanälen versehene Matratze, wie weiter unten im Hinblick auf die Fig. 9 bis 13 noch erläutert wird, verwendet wird. In Fig. 6 ist rein beispielhaft noch angedeutet, dass die zweite Lage 50 mit einer oder mehreren Lochungen 52 im Bereich einer oder mehrerer der Öffnungen 40 versehen werden kann, um so eine verbesserte Luftdurchlässigkeit und Atmungsaktivität zu erreichen. Weiterhin geht aus Fig. 6 hervor, dass die Öffnungen 40 eine lichte Weite 44 (beziehungsweise einen Durchmesser oder eine Kantenlänge, je nach geometrischer Ausgestaltung) von vorzugsweise etwa 2 mm bis etwa 30 mm aufweisen können. Diese Abmessungen gelten analog für die Abmessungen der im Zusammenhang mit Fig. 7 erläuterten Dünnschichtbereiche 30.

Bei einer zweiten Variante zur Herstellung des Flächengebildes 10 gemäß Fig. 7 wird die erste Lage 20 zumindest bereichsweise erhitzt und teilweise thermisch zersetzt, wobei sich aus der teilweisen thermischen Zersetzung eine Klebeschicht ergibt, mittels der die erste Lage 20 unter Druckeinwirkung mit der zweiten Lage 50 stoffschlüssig verbunden wird. Hierzu wird die erste Lage 20 vorzugsweise mittels einer offenen Flamme erhitzt. Durch das Erhitzen sind die Dünnschichtbereiche 30 also auf eine Restdicke 34 reduziert worden, wobei aber bewusst oder unbewusst keine durchgehenden Öffnungen wie bei Fig. 6 entstanden sind. Beispielsweise wird die Dicke 32 der Dünnschichtbereiche 30 beim Erhitzen und der dadurch bewirkten thermischen Zersetzung um etwa 0,5 mm bis etwa 1 mm reduziert. Beispielsweise kann die Restdicke 34 wenige Millimeter, insbesondere bis etwa 2 mm, betragen. Eine solch geringe Restdicke 34 ermöglicht eine gute Luftdurchlässigkeit und Atmungsaktivität für das Flächengebilde 10, wobei diese Eigenschaften bei der Verwendung eines offenzelligen Weichschaumstoffes für die erste Lage 20 umso besser sind. Als weiterer Vorteil ist zu erwähnen, dass ein Flächengebilde 10 mit der in Fig. 7 gezeigten Ausgestaltung eine gute Stabilität aufweist, da die Dünnschichtbereiche 30 die Erhebungen 24 und Vertiefungen 26 miteinander verbinden. Dadurch ist das Flächengebilde 10 bei der Herstellung einfach zu handhaben.

Bei der oben erläuterten ersten und zweiten Variante ist es bevorzugt vorgesehen, die erste Lage 20 durch Flammkaschieren zu erhitzen. Der Vorgang des Flammkaschierens kann mit unterschiedlichen Temperaturen und unterschiedlich lange durchgeführt werden, wobei die Wahl dieser Parameter insbesondere davon abhängt, ob der Schaumstoff der ersten Lage 20 im Bereich der durch die Profilierung geschaffenen Dünnschichtbereiche 30 auf eine Restdicke 34 reduziert werden soll oder ob der Schaumstoff der Dünnschichtbereiche 30 durch die Hitze vollständig zum "Schmelzen" gebracht werden soll, so dass im Bereich der Dünnschichtbereiche 30 Öffnungen 40 entstehen. Es ist auch möglich das Flächengebilde 10 sowohl mit Dünnschichtbereichen 30 als auch mit Öffnungen 40 zu versehen.

Bei einem weiteren Ausführungsbeispiel kann die erste Lage 20 aus einer offenporigen Weichschaumstofflage, beispielsweise als Bahnenware, bestehen, die in einem Schritt mit einer Oberflächenprofilierung versehen wird, so dass Erhebungen 24, Vertiefungen 26 und Dünnschichtbereiche 30 vorhanden sind. Hierbei können die Dünnschichtbereiche 30 eine geringe Dicke beziehungsweise Restdicke von wenigen Millimetern, insbesondere weniger als 5 mm, weiter vorzugsweise etwa 1 mm oder weniger, aufweisen. Die profilierte erste Lage 20 ist mit der zweiten Lage 50 durch Klebekaschieren verbunden. Als Klebemittel wird insbesondere ein Hotmelt-Kleber in Form von spin webs oder Pulver verwendet. Somit sind bei diesem Ausführungsbeispiel keine Öffnungen 40 ausgebildet. Jedoch bewirken die Dünnschichtbereiche 30, insbesondere bei einer Dicke von weniger als 1 mm, bereits eine gute Atmungsaktivität im Vergleich zu herkömmlicher Bahnenware.

Fig. 8 zeigt die schematische Darstellung des Flächengebildes 10 von oben mit einer möglichen Anordnung der Vielzahl von Dünnschichtbereichen 30 und/oder Vielzahl von Öffnungen 40. Zwischen den längs oder quer benachbarten Dünnschichtbereichen 30 und/oder Öffnungen 40 befinden sich die Erhebungen 24 und Vertiefungen 26. Es ist grundsätzlich möglich lediglich Öffnungen 40, nur Dünnschichtbereiche 30 oder eine Kombination von Öffnungen 40 und Dünnschichtbereichen 30 in dem Flächengebilde 10 vorzusehen.

Als zweite Lage 50 kann beispielsweise eine weitere Schaumstofflage, eine Kunststofffolie, ein Textil, ein Fließ oder Leder verwendet werden. Bei einer Anwendung des Flächengebildes 10 als Polsterauflage kann beispielsweise ein Stofftextil als zweite Lage 50 auf die erste Lage 20 aufkaschiert werden. Vorteilhafterweise ist die zweite Lage 50 mit einer Vielzahl von Lochungen 54, beispielsweise in Form einer Perforation, versehen.

Insbesondere bei einem Verbinden von der profilierten Schaumstofflage 20 mit der zweiten Lage 50 in Form einer dünnen Textillage mittels Flammkaschieren hat sich herausgestellt, dass die Textillage 50 im Wesentlichen die Oberflächenprofilierung der ersten Lage 20 annimmt. Auf diese Weise kann dem sandwichartig aufgebauten Flächengebilde zugleich im Hinblick auf die zweite Lage 50 eine Oberflächenstruktur verliehen werden, die sie alleine nicht hat und die andernfalls durch aufwendige Verformungsschritte erzielt werden müsste. Ferner lässt sich so eine optisch ansprechende Oberflächenstruktur erreichen.

Mittels der Fig. 9 bis 13 wird nun eine besonders bevorzugte Anwendung des Flächengebildes 10 als Auflage für ein Polsterelement 60 erläutert. In diesem Zusammenhang kann das Flächengebilde 10 auf als Polsterelementauflage bezeichnet werden.

Im vorliegenden Fall handelt es sich bei dem Polsterelement 60 um eine Matratze mit einem Grundkörper 70, der eine Aussparung 74 und eine Wandung 76 aufweist. Der Grundkörper 70 weist eine Oberseite 71, eine Unterseite 72 und eine Seitenfläche 73 auf. Der Grundkörper 70 ist aus einem Blockschaumkörper aus einem offenzelligen Weichschaumstoff hergestellt. Die Aussparung 74 dient zur Aufnahme einer oder mehrerer Federelementeinheiten 80, die in Fig. 10 in einer Ansicht von oben teilweise dargestellt ist.

Fig. 11 zeigt eine Ansicht von oben auf das Polsterelement 60 gemäß Fig. 10, wobei mehrere Federelementeinheiten 80 in der Aussparung 74 aufgenommen sind. In Fig. 11 ist die Polsterelementauflage in Form des Flächengebildes 10 weg gelassen. Die in Fig. 10 ausschnittsweise gezeigte Federelementeinheit 80 umfasst mehrere Federelemente 90, wobei es bevorzugt vorgesehen ist, dass die Federelementeinheit 80 einstückig durch Formschäumen gebildet ist. Das einzelne Federelement 90 umfasst eine äußere Mantelfläche 94, die Anschlussflächen 95 und Seitenflächen 96 umfasst. In jedem der Federelemente 90 ist etwa mittig eine Ausnehmung 98 eingebracht, die als Luftkanal dient. Diese Ausnehmung 98 verläuft durchgehend von der Oberseite 91 zur Unterseite 92 des Federelements 90. Die einzelnen Federelemente 90 sind derart relativ zueinander angeordnet, dass die Anschlussflächen 95 benachbarter Federelemente 90 aneinandergrenzen, wohingegen die zwischen den Anschlussflächen 95 liegenden Seitenflächen 96 gegenüberliegend angeordnet sind und einen Freiraum 84 bilden. Im Grundriss gemäß Fig. 10 betrachtet ist der Freiraum 84 etwa rechteckförmig, insbesondere etwa quadratförmig. Mit dieser Anordnung der Anschlussflächen 95 und Seitenflächen 96 und der Zusammenstellung der einzelnen Federelemente 90 zur Bildung der Federelementeinheit 80 wird eine kombinierte Anordnung der Federelemente 90 geschaffen, die über die Ausnehmungen 98 und die Freiräume 84 einerseits einen Abtransport von Wärme und Feuchtigkeit und somit eine Lüftung und andererseits zugleich eine gewünschte Elastizität bereitstellt.

Der Querschnitt gemäß Fig. 13 zeigt dann das vollständig zusammengestellte Polsterelement 60 mit dem Grundkörper 70, mehreren in der Aussparung 74 aufgenommenen Federelementeinheiten 80 und dem Flächengebilde 10 als Polsterauflage auf der Oberseite 71 des Grundkörpers 70. Die mehreren Federelementeinheiten 80 stellen für unterschiedliche Liegezonen unterschiedliche Elastizitätseigenschaften, insbesondere Härtegrade, zur Verfügung.

Das Flächengebilde 10 ist derart relativ zu dem Grundkörper 70 und/oder der gesamten Federelementeinheit 80 positioniert, dass die Öffnungen 40 und/oder die Dünnschichtbereiche 30 sich wenigstens teilweise und vorzugsweise vollständig mit dem Ausnehmungen 98 und/oder den Freiräumen 84 überdecken. Um die gegenseitige Lage der Öffnungen 40 und/oder Dünnschichtbereiche 30 im Vergleich zu den Ausnehmungen 98 und/oder den Freiräumen 84 weiter zu erläutern, wird auf Fig. 12 verwiesen, in der rein schematisch die Lage der Öffnungen 40 beziehungsweise Dünnschichtbereiche 30 angedeutet ist.

Auf diese Weise kann ein optimaler Abtransport von Wärme und Feuchtigkeit von der Oberseite 11 des Flächengebildes 10 ermöglicht werden. Weiterhin ist es auch möglich, dass im Bereich einer Ausnehmung 98 und/oder im Bereich eines Freiraumes 84 mehrere Öffnungen 40 und/oder Dünnschichtbereiche 30 vorhanden sind.

Des Weiteren ist es auch möglich, mehrere Flächengebilde 10 übereinander anzuordnen und als Polsterelementauflage für die Matratze zu verwenden.

Schließlich kann das Flächengebilde 10 auch als Auflage für ein sonstiges Liegeteil oder einen Sitz verwendet werden. Das Flächengebilde 10 weist durch die Dünnschichtbereiche 30 und/oder Öffnungen 40 gute schallabsorbierende Eigenschaften auf, so dass das Flächengebilde 10 auch als Schalldämmelement und/oder als Verkleidungsteil eingesetzt werden kann.

### Bezugszeichenliste

- 10: Flächengebilde
- 11: Oberseite
- 12: Unterseite

- 20: erste Lage
- 21: Oberseite
- 22: Unterseite
- 24: Erhebung
- 26: Vertiefung
- 28: Dicke

- 30: Dünnschichtbereich
- 32: Dicke
- 34: Restdicke

- 40: Öffnung
- 42: Umriss
- 44: lichte Weite

- 50: zweite Lage
- 52: Lochung

- 60: Polsterelement

- 70: Grundkörper
- 71: Oberseite
- 72: Unterseite
- 73: Seitenfläche
- 74: Aussparung
- 76: Wandung

- 80: Federelementeinheit
- 84: Freiraum

- 90: Federelement
- 91: Oberseite
- 92: Unterseite
- 94: Mantelfläche
- 95: Anschlussfläche
- 96: Seitenfläche
- 98: Ausnehmung

## Patentansprüche

1. Verfahren zur Herstellung eines Flächengebildes (10), das eine erste Lage (20) aus einem Schaumstoff und/oder einer Kunststofffolie, die eine Oberseite (21), eine Unterseite (22) und eine Dicke (28) hat, und eine zweite Lage (50) umfasst, mit folgenden Verfahrensschritten:
die Oberfläche der Oberseite (21) und/oder der Unterseite (22) der ersten Lage (20) wird derart profiliert, dass Erhebungen (24) und Vertiefungen (26) sowie Dünnschichtbereiche (30), die eine Dicke (32) haben, die geringer ist als die Dicke (28) der ersten Lage (20), ausgebildet werden;
die erste Lage (20) wird zumindest bereichsweise erhitzt, **dadurch** unter Bildung einer Klebeschicht wenigstens teilweise thermisch zersetzt und unter Druckeinwirkung mit der zweiten Lage (50) stoffschlüssig verbunden, und
durch die Hitzeeinwirkung wird die Dicke (32) der Dünnschichtbereiche (30) zur Bildung von Luftdurchlassbereichen oder Schalldämmbereichen auf eine Restdicke (34) reduziert und/oder es werden Öffnungen (40) im Bereich der Dünnschichtbereiche (30) gebildet.

2. Verfahren nach Anspruch 1, **gekennzeichnet durch** eine Restdicke (34) von bis zu etwa 5 mm, vorzugsweise von bis zu etwa 1 mm.

3. Verfahren nach Anspruch 1 oder 2, **dadurch gekennzeichnet, dass** die erste Lage (20) mit einer Flamme erhitzt wird, wobei vorzugsweise die erste Lage (20) punktuell oder flächig mit der zweiten Lage (50) verbunden wird.

4. Verfahren nach einem der Ansprüche 1 bis 3, **gekennzeichnet durch** ein Verhältnis der Gesamtfläche der Dünnschichtbereiche (30) und/oder Öffnungen (40) zu der Restfläche des Flächengebildes (10), das in einem Bereich von etwa 1:50 bis etwa 1:2, vorzugsweise in einem Bereich von etwa 1:30 bis etwa 1:20, liegt.

5. Verfahren nach einem der Ansprüche 1 bis 4, **gekennzeichnet durch** Dünnschichtbereiche (30) und/oder Öffnungen (40), die eine kurvenlinienförmige, vorzugsweise bogenförmige oder runde, oder eine lineare, vorzugsweise viereckige oder achteckige, Form aufweisen, wobei die Dünnschichtbereiche (30) und/oder Öffnungen (40) eine lichte Weite (44) oder einen Durchmesser oder eine Kantenlänge von etwa 1 mm bis etwa 50 mm, insbesondere von etwa 2 mm bis etwa 30 mm, aufweisen.

6. Verfahren nach einem der Ansprüche 1 bis 5, **dadurch gekennzeichnet, dass** die erste Lage (20) durch Schneiden, insbesondere mittels eines Messers oder eines Drahtes, durch Komprimieren und/oder Umformen profiliert wird.

7. Verfahren nach einem der Ansprüche 1 bis 6, **dadurch gekennzeichnet, dass** als Schaumstoff für die erste Lage (20) ein offenzelliger oder ein geschlossenzelliger Weichschaumstoff verwendet wird, wobei vorzugsweise als zweite Lage (50) eine Schaumstofflage, eine Kunststofffolie, ein Textil, ein Vlies oder Leder verwendet wird.

8. Verfahren nach einem der Ansprüche 1 bis 7, **dadurch gekennzeichnet, dass** die zweite Lage (50) beim Verbinden mit der ersten Lage (20) im Wesentlichen die Oberflächenprofilierung von der ersten Lage (20) erhält.

9. Flächengebilde (10) zur Bildung einer Auflage oder eines Bezuges für einen Sitz, eine Matratze oder ein sonstiges Liegeteil oder zur Bildung eines Schalldämmelements oder eines Verkleidungsteils, umfassend
eine erste Lage (20) aus einem Schaumstoff und/oder aus einer Kunststofffolie, die eine Oberseite (21), eine Unterseite (22) und eine profilierte Oberfläche mit Erhebungen (24) und Vertiefungen (26) aufweist; und
eine zweite Lage (50), die stoffschlüssig mit der ersten Lage (20) verbunden ist,
wobei die erste Lage (20) luftdurchlässige und atmungsaktive Dünnschichtbereiche (30) mit einer Dicke (32), die geringer als eine Dicke (28) der ersten Lage (20) ist, aufweist,
wobei die erste Lage (20) mit der zweiten Lage (50) mittels einer beim Erhitzen der ersten Lage (20) und deren wenigstens teilweisen thermischen Zersetzung gebildeten Klebeschicht verbunden ist und
wobei durch die Hitzeeinwirkung die Dicke (32) der Dünnschichtbereiche (30) zur Bildung von Luftdurchlassbereichen oder Schalldämmbereichen auf eine Restdicke (34) reduziert ist und/oder Öffnungen (40) im Bereich der Dünnschichtbereiche (30) gebildet sind.

10. Flächengebilde nach Anspruch 9, **gekennzeichnet durch** eine Restdicke (34) von bis zu etwa 5 mm, vorzugsweise von bis zu etwa 1 mm.

11. Flächengebilde nach Anspruch 9 oder 10, **gekennzeichnet durch** mehrere Zonen mit unterschiedlicher Formgebung und/oder gegenseitiger Anordnung der Dünnschichtbereiche (30) und/oder Öffnungen (40).

12. Flächengebilde nach einem der Ansprüche 9 bis 11, **dadurch gekennzeichnet, dass** der Schaumstoff der ersten Lage (20) aus einem offenzelligen oder einem geschlossenzelligen Weichschaumstoff besteht, wobei vorzugsweise die zweite Lage (50) eine Schaumstofflage, eine Kunststofffolie, ein Textil, ein Vlies oder Leder umfasst.

13. Flächengebilde nach einem der Ansprüche 9 bis 12, **dadurch gekennzeichnet, dass** die zweite Lage (50) mit Lochungen (52) versehen ist, wobei vorzugsweise sich die Lochungen (52) mit den Dünnschichtbereichen (30) und/oder Öffnungen (40) wenigstens teilweise überdecken.

14. Polsterelement, umfassend:
einen Grundkörper (70) und
ein Flächengebilde (10) nach einem der Ansprüche 9 bis 13.

15. Polsterelement nach Anspruch 14, **gekennzeichnet durch** eine Federelementeinheit (80) mit mehreren Federelementen (90), wobei die Federelemente (90) jeweils eine Ausnehmung (98) umfassen und wobei das Flächengebilde (10) auf der Federelementeinheit (80) angeordnet und derart relativ zu der Federelementeinheit (80) positioniert ist, dass sich die Dünnschichtbereiche (30) und/oder die Öffnungen (40) mit den Ausnehmungen (98) wenigstens teilweise überdecken.

16. Polsterelement nach Anspruch 14 oder 15, **dadurch gekennzeichnet, dass** zwischen den Federelementen (90) Freiräume (82) vorgesehen sind und dass das Flächengebilde (10) derart auf der Federelementeinheit (80) angeordnet und relativ dazu positioniert ist, dass sich die Dünnschichtbereiche (30) und/oder Öffnungen (40) mit den Freiräumen (82) wenigstens teilweise überdecken, wobei vorzugsweise der Grundkörper (70) aus der Federelementeinheit (80) besteht oder der Grundkörper (70) die Federelementeinheit (80) umfasst und wobei vorzugsweise der Grundkörper (70) eine Aussparung (74) umfasst, in der die Federelementeinheit (80) aufgenommen ist.

## Claims

1. Method for producing a fabric (10), comprising a first layer (20) of a foam material and/or a plastic film having an upper side (21), a lower side (22) and a thickness (28), and a second layer (50) involving the following process steps:
the upper surface of the upper side (21) and/or the lower side (22) of the first layer (20) is configured in such a way that elevated (24) and sunken areas (26) are formed as well as thin layer areas (30) which have a thickness (32) that is thinner than the thickness (28) of the first layer (20);
at least areas of the first layer (20) are heated thereby, through the formation of an adhesive layer, at least in part thermally decomposed and, with the application of pressure, are bonded to the second layer (50), and
for the formation of air-permeable or sound-insulating areas, the thickness (32) of the thin layer areas (30) is reduced through the effect of heat to a residual thickness (34) and/or openings (40) are formed in parts of the thin layer areas (30).

2. Method according to claim 1 **characterised by** a residual thickness (34) of up to approximately 5 mm., preferably of up to approximately 1 mm.

3. Method according to claim 1 or claim 2 **characterised in that** the first layer (20) is heated using a flame wherein preferably the first layer (20) is bonded with the second layer (50) at isolated points or over large areas.

4. Method according to one of the claims 1 to 3 **characterised by** a ratio of the total surface area of the thin layer areas (30) and/or openings (40) to the remaining area of the fabric (10) which lies in a range of approximately 1:50 to approximately 1:2, preferably in a range of approximately 1:30 to approximately 1:20.

5. Method according to one of the claims 1 to 4 **characterised by** thin layer areas (30) and/or openings (40) in the shape of a curved line, preferably bow-shaped or rounded, or of a linear shape, preferably square or octagonal, wherein the thin layer areas (30) and/or openings (40) have an inner width (44) or a diameter or a side length of approximately 1 mm. to 50 mm., in particular of approximately 2 mm. to 30 mm.

6. Method according to one of the claims 1 to 5 **characterised in that** the first layer (20) is given its profiled shape by means of cutting, particularly with a knife or a wire, by compression and/or by reshaping.

7. Method according to one of the claims 1 to 6 **characterised in that** an open-cell or a closed-cell flexible foam is used for the foam material of the first layer (20), wherein preferably a foam layer, a plastic film, a textile, a fleece or leather is used for the second layer (50).

8. Method according to one of the claims 1 to 7 **characterised in that** the second layer (50) when being bonded to the first layer (20) essentially takes on the surface profile of the first layer (20).

9. A fabric (10) for the creation of an overlay or a seat cover, a mattress or similar bed-like recliner or for the creation of a sound-insulating or a cladding element, comprising
a first layer (20) made of a foam material and/or a plastic film having an upper surface (21) a lower surface (22) and a profiled surface with elevated (24) and sunken (26) areas; and
a second layer (50) which is bonded with the first layer (20); wherein the first layer (20) has air-permeable and breathable thin layer areas (30) with a thickness (32) that is less than a thickness (28) of the first layer (20);
wherein the first layer (20) is bonded to the second layer (50) by means of an adhesive layer formed by heating the first layer (20) and at least partial thermal decomposition of said layer and
wherein, by the effect of heat, the thickness (32) of the thin layer areas (30) is reduced to a residual thickness (34) for the formation of air-permeable areas or sound-insulation areas and/or openings (40) are formed in the thin layer areas (30).

10. Fabric according to claim 9 **characterised by** a residual thickness (34) of up to approx. 5 mm, preferably of up to approx. 1 mm.

11. Fabric according to claim 9 or 10 **characterised by** a number of zones having different shapes and/or mutual positioning arrangements of the thin layer areas (30) and /or openings (40).

12. Fabric according to one of the claims 9 to 11 **characterised in that** the foam material of the first layer (20) consists of an open-cell or a closed-cell flexible foam, wherein preferably the second layer (50) comprises a foam layer, a plastic film, a textile, a fleece or leather.

13. Fabric according to one of the claims 9 to 12 **characterised in that** the second layer (50) is provided with perforations (52), wherein preferably the perforations (52) are covered at least in part by the thin layer areas (30) and /or the openings (40).

14. Padded element, comprising:
a basic body (70) and
a fabric (10) according to one of the claims 9 to 13.

15. Padded element according to claim 14 **characterised by** a spring element unit (80) with a plurality of spring elements (90), wherein the spring elements (90) each have a recess (98) and wherein the fabric (10) is positioned over the spring element unit (80) and in such a way relative to the spring element unit (80) that the thin layer areas (30) and/or the openings (40) cover at least in part the recesses (98).

16. Padded element according to claim 14 or 15 **characterised in that** free spaces (82) are provided between the spring elements (90) and that the fabric (10) is so arranged over the spring element unit (80) and relative to it that the thin layer areas (30) and/or openings (40) cover at least in part the free spaces (82), wherein preferably the basic body (70) consists of the spring element unit (80) or the basic body (70) includes the spring element unit (80) and wherein preferably the basic body (70) has a recess (74) in which the spring element unit (80) is accommodated.

## Revendications

1. Procédé pour la fabrication d'une structure surfacique (10) qui possède une première couche (20) en mousse et/ou un film en matière plastique qui présente une face supérieure (21), une face inférieure (22) et une épaisseur (28), et une seconde couche (50), comprenant les étapes de procédé suivantes :
la surface de la face supérieure (21) et/ou de la face inférieure (22) de la première couche (20) est profilée de telle manière que l'on forme des bosses (24) et des creux (26) ainsi que des zones en couche mince (30), qui ont une épaisseur (32) inférieure à l'épaisseur (28) de la première couche (20) ;
la première couche (20) est au moins localement chauffée et de ce fait au moins partiellement thermiquement décomposée en formant une couche de colle, et est reliée à la seconde couche (50) par application de pression en établissant une coopération de matières, et
du fait de l'application de chaleur, l'épaisseur (32) des zones en couche mince (30) est réduite jusqu'à une épaisseur résiduelle (34) afin de former des zones de passage d'air ou des zones d'atténuation phonique, et/ou il se forme des ouvertures (40) dans la région des zones en couche mince (30).

2. Procédé selon la revendication 1, **caractérisé par** une épaisseur résiduelle (34) allant jusqu'à environ 5 mm, de préférence jusqu'à environ 1 mm.

3. Procédé selon la revendication 1 ou 2, **caractérisé en ce que** la première couche (20) est chauffée avec une flamme, et ladite première couche (20) est de préférence reliée de manière ponctuelle ou surfacique avec la seconde couche (50).

4. Procédé selon l'une des revendications 1 à 3, **caractérisé par** un rapport de la surface totale des zones en couche mince (30) et/ou des ouvertures (30) sur la surface restante de la structure surfacique (10), qui est situé dans une plage d'environ 1:50 à environ 1:2, de préférence dans une plage d'environ 1:30 à environ 1:20.

5. Procédé selon l'une des revendications 1 à 4, **caractérisé par** des zones en couche mince (30) et/ou par des ouvertures (40) qui présentent une forme en ligne incurvées, de préférence en lignes arquées ou une forme ronde, ou encore une forme en lignes rectilignes, de préférence carrée ou octogonale, et les zones en couche mince (30) et/ou les ouvertures (40) présentent une largeur libre (44) ou un diamètre ou une longueur d'arête d'environ 1 mm à environ 50 mm, en particulier d'environ 2 mm à environ 30 mm.

6. Procédé selon l'une des revendications 1 à 5, **caractérisé en ce que** la première couche (20) est profilée par découpe, en particulier au moyen d'un couteau ou d'un fil, par compression et/ou par déformation.

7. Procédé selon l'une des revendications 1 à 6, **caractérisé en ce que** l'on utilise comme mousse pour la première couche (20) une mousse souple à cellules ouvertes ou à cellules fermées, et on utilise de préférence comme seconde couche (50) une couche de mousse, une couche de matière plastique, un textile, un non-tissé, ou du cuir.

8. Procédé selon l'une des revendications 1 à 7, **caractérisé en ce que**, lors de la liaison avec la première couche (20), la seconde couche (50) reçoit sensiblement le profilage de surface de la première couche (20).

9. Structure surfacique (10) destinée à la réalisation d'une sous-couche ou d'un revêtement pour un siège, un matelas ou un autre meuble de couchage, ou encore pour la réalisation d'un élément d'atténuation sonore ou d'une pièce d'habillage, comprenant
une première couche (20) en mousse et/ou en film de matière plastique, qui présente une face supérieure (21), une face inférieure (22) et une surface profilée avec des bosses (24) et des creux (26) ; et
une seconde couche (50) qui est reliée avec la première couche (20) en établissant une coopération de matières,
dans laquelle la première couche (20) comprend des zones en couche mince perméables à l'air et actives en termes respiratoires (30) et d'une épaisseur (32) qui est inférieure à une épaisseur (28) de la première couche (20),
dans laquelle la première couche (20) est reliée à la seconde couche (50) au moyen d'une couche de colle formée lors du chauffage de la première couche (20) par sa décomposition thermique au moins partielle, et
dans laquelle du fait de l'application de chaleur l'épaisseur (32) des zones en couche mince (30) est réduite à une épaisseur résiduelle (34) pour former des zones de passage d'air ou des zones d'atténuation phonique, et/ou des ouvertures (40) sont formées dans la région des zones en couche mince (30).

10. Structure surfacique selon la revendication 9, **caractérisée par** une épaisseur résiduelle (34) allant jusqu'à environ 5 mm, de préférence jusqu'à environ 1 mm.

11. Structure surfacique selon la revendication 9 ou 10, **caractérisée par** plusieurs zones de conformations différentes et/ou avec agencements réciproques des zones en couche mince (30) et/ou des ouvertures (40).

12. Structure surfacique selon l'une des revendications 9 à 11, **caractérisée en ce que** la mousse de la première couche (20) est une mousse souple à cellules ouvertes ou à cellules fermées, et de préférence la seconde couche (50) comprend une couche de mousse, un film en matière plastique, un textile, un non-tissé ou du cuir.

13. Structure surfacique selon l'une des revendications 9 à 12, **caractérisée en ce que** la seconde couche (50) est dotée de perforations (52), lesdites perforations (52) recouvrant de préférence au moins partiellement les zones en couche mince (30) et/ou les ouvertures (40).

14. Élément de rembourrage, comprenant :
un corps de base (70), et
une structure surfacique (10) selon l'une des revendications 9 à 13.

15. Élément de rembourrage selon la revendication 14, **caractérisé par** une unité d'éléments à ressort (80) comprenant plusieurs éléments à ressort (90), les éléments à ressort (90) comportant chacun un évidement (98), et la structure surfacique (10) est agencée sur l'unité d'éléments à ressort (80), et est positionnée de telle manière par rapport à
l'unité d'éléments à ressort (80) que les zones en couche mince (30) et/ou les ouvertures (40) recouvrent au moins partiellement les évidements (98).

16. Élément de rembourrage selon la revendication 14 ou 15, **caractérisé en ce que** des espaces libres (82) sont prévus entre les éléments à ressort (90), et **en ce que** la structure surfacique (10) est agencée sur l'unité d'éléments à ressort (80) et positionnée par rapport à celle-ci de telle manière que les zones en couche mince (30) et/ou les ouvertures (40) recouvrent au moins partiellement les espaces libres (82), dans lequel le corps de base (70) est de préférence constitué par l'unité d'éléments à ressort (80), ou bien le corps de base (70) inclut l'unité d'éléments à ressort (80), et dans lequel le corps de base (70) comprend de préférence un évidement (74) dans lequel est reçue l'unité d'éléments à ressort (80).
